Europäisches Patentamt

European Patent Office

Office européen des brevets

(19)

(11) Numéro de publication : **0 657 734 A1**

## (12) DEMANDE DE BREVET EUROPEEN

(21) Numéro de dépôt : **94402828.1**

(22) Date de dépôt : **08.12.94**

(51) Int. Cl.⁶ : **G01N 27/72**

(30) Priorité : **10.12.93 FR 9314871**

(43) Date de publication de la demande :
**14.06.95 Bulletin 95/24**

(84) Etats contractants désignés :
**DE FR GB IT**

(71) Demandeur : **COMMISSARIAT A L'ENERGIE ATOMIQUE**
**31/33, rue de la Fédération**
**F-75015 Paris Cédex 15 (FR)**

(72) Inventeur : **Giordano, Patrice**
**2 Clos Flora,**
**Chemin du Pavillon**
**F-84120 Pertuis (FR)**
Inventeur : **Glenat, Henri**
**14, Avenue de la Foy**
**F-38700 Corenc (FR)**
Inventeur : **Ittel, Jean-Michel**
**Le Prayer,**
**Route de Montabon**
**F-38660 La Terrasse (FR)**
Inventeur : **Locatelli, Marcel**
**4 Pré Morard**
**F-38330 Montbonnot (FR)**

(74) Mandataire : **Dubois-Chabert, Guy et al**
**Société de Protection des Inventions**
**25, rue de Ponthieu**
**F-75008 Paris (FR)**

(54) **Microdispositif de mesure de caractéristiques électromagnétiques d'un milieu et utilisation de ce microdispositif.**

(57) Microdispositif de mesures de caractéristiques électromagnétiques d'un milieu comprenant au moins une bobine émettrice (31), au moins une bobine de réception (41, 51), des moyens pour engendrer une tension alternative aux bornes de la ou des bobines émettrices, et des moyens de mesure d'un signal aux bornes de la ou des bobines de réception. Il comprend, en outre, un circuit en matériau magnétique doux et électriquement isolant qui sert de support à chacune des bobines et qui est ouvert sur le milieu à mesurer.

FIG. 2

EP 0 657 734 A1

## Domaine technique

L'objet de la présente invention concerne un microdispositif de mesure de caractéristiques électromagnétiques d'un milieu et l'utilisation de ce dispositif.

Elle trouve une application dans le domaine de la mesure de caractéristiques électromagnétiques d'un milieu à contrôler. Un exemple d'une telle application est la mesure des caractéristiques, notamment la conductivité et la susceptibilité, de formations géologiques traversées par un forage.

## Etat de la technique

On désigne par "diagraphie" toute mesure continue des variations, en fonction de la profondeur, d'une caractéristique donnée des formations traversées par un sondage. Les premiers outils de diagraphie ont été introduits par les frères Schlumberger en 1927. Le principe de la mesure consistait à mesurer au moyen d'électrodes la résistivité électrique des formations traversées par des sondages remplis de boues conductrices. Suite à l'utilisation de plus en plus fréquente de boues non conductrices, pour lesquelles les diagraphies de résistivité par électrodes fonctionnaient mal, Doll a introduit en 1949 un autre principe de diagraphie de résistivité : la mesure par induction électromagnétique (H.G. Doll, "Introduction to induction logging and application to logging of wells drilled with oil based mud", Petroleum Transactions, pp. 148-162, 1949). De nombreux dispositifs, fonctionnant suivant l'un ou l'autre de ces deux principes, ont été conçus et réalisés, permettant de déterminer les résistivités des formations avec une résolution verticale allant de quelques mètres à quelques dizaines de centimètres (la résolution verticale d'un outil est la mesure du banc le plus fin que puisse détecter l'outil).

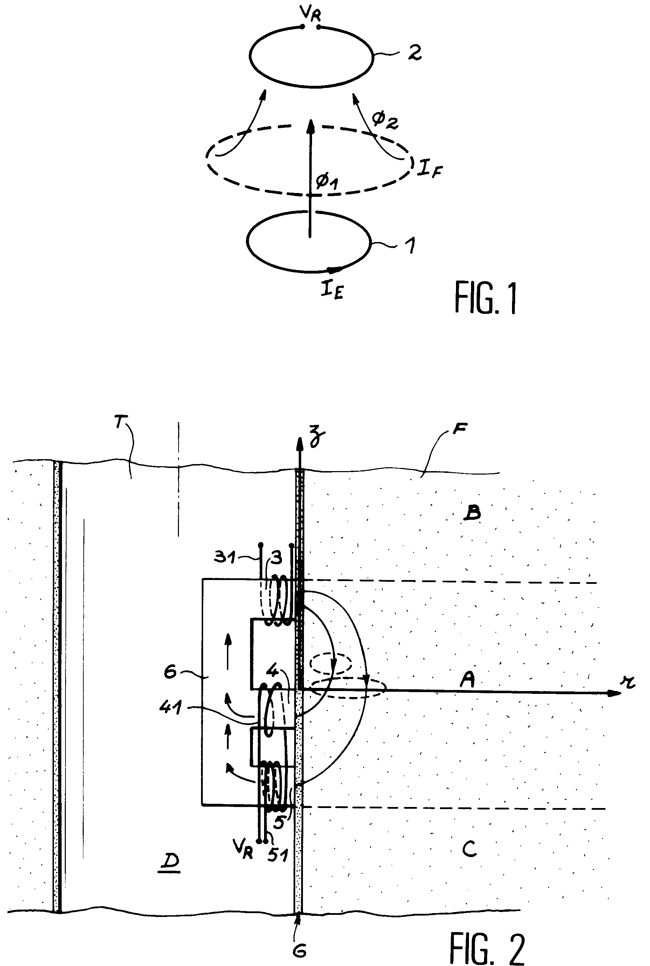

Cependant, le besoin de caractériser les formations à des échelles plus fines, pour déterminer leur pendage, par exemple, a amené la conception de très petits dispositifs, appelés microdispositifs, montés sur des patins appuyés contre la paroi du sondage. Ces microdispositifs visent une bonne résolution verticale, de l'ordre du centimètre. Dans le cas des microdispositifs de résistivité par contact électrique, une telle résolution peut être obtenue grâce à la très petite taille des électrodes. Cependant, avec l'utilisation croissante des boues de forage non conductrices, est apparu le besoin de microdispositifs de mesure de conductivité par induction. Le principe de fonctionnement d'un tel dispositif, tel qu'expliqué dans un article de Wong Cho Chew et al. intitulé "Theory of Microinduction Measurements", (IEEE Transactions on Geoscience and remote Sensing, vol. 26, N°6, November 1988), est représenté sur la figure 1. Un courant alternatif basse fréquence $I_E = I_o.$ $e^{i\omega t}$ circule dans une bobine 1 dite "émettrice", produisant un champ magnétique de même fréquence ; celui-ci induit à son tour des courants de Foucault $I_F$ dans la formation. Ces courants de Foucault sont proportionnels à la conductivité du terrain et sont déphasés de 90° par rapport au courant émetteur. Ceux-ci induisent à leur tour dans une bobine dite "réceptrice" 2 un signal - force électromotrice - déphasé de 180° par rapport au courant émetteur. Bien souvent, on dispose deux bobines réceptrices montées en opposition de manière à éliminer le flux direct $\phi_1$ direct généré par l'émetteur et à n'être sensible qu'au flux secondaire ($\phi_2$) provenant de la formation. La tension induite résultante est alors directement proportionnelle à la conductivité du terrain.

Malgré plusieurs études théoriques, telles que celle par Chew et al., mentionnée ci-dessus, peu de solutions pratiques ont été trouvées au problème de la résolution exposé plus haut : avec de tels appareils à induction, on n' arrive guère qu'à une résolution verticale de l'ordre de quelques centimètres.

En outre, les limitations pratiques à l'usage de tels dispositifs sont nombreuses, puisque ces derniers sont sensibles au fluide de forage lui-même ainsi qu'aux irrégularités de paroi du sondage, notamment aux variations de "stand-off" (distance capteur/paroi) : ces deux phénomènes peuvent conduire à des signaux parasites bien plus importants que le signal de la formation. D'autres signaux parasites proviennent du couplage avec d'autres dispositifs voisins lorsque plusieurs d'entre eux sont disposés dans le même sondage, ou bien du couplage du dispositif avec le support central de l'outil.

## Exposé de l'invention

Pour remédier à tous ces problèmes, l'invention propose une solution simple.

L'invention a pour objet un microdispositif de diagraphie d'un milieu comprenant une bobine émettrice et deux bobines de réception, caractérisé en ce qu'il comprend également un circuit en matériau magnétique doux et électriquement isolant, en forme de "E", ouvert sur le milieu à mesurer, avec une partie médiane et trois branches latérales perpendiculaires à la partie médiane et parallèles entre elles, les bobines étant enroulées sur ces branches latérales de telle sorte que les bobines de réception soient situées sur des branches latérales voisines.

Selon un second mode de réalisation de l'invention, le circuit magnétique comporte une partie médiane et quatre branches latérales parallèles entre elles et perpendiculaires à la partie médiane.

Il peut comporter alors deux bobines de réception situées sur les deux branches latérales centrales, entre deux branches latérales extérieures porteuses chacune d'une bobine émettrice.

Il peut aussi comporter deux bobines émettrices situées sur les deux branches latérales centrales, entre deux branches latérales extérieures porteuses chacune d'une bobine de réception.

Les branches latérales centrales peuvent être de longueur différente des deux branches latérales extérieures.

Selon un autre mode de réalisation de l'invention, le circuit magnétique comporte une partie médiane et cinq branches latérales parallèles entre elles sur lesquelles sont bobinées, dans cet ordre, une première bobine émettrice, une première bobine réceptrice, une seconde bobine de réception montée en opposition à la première bobine réceptrice, une troisième bobine réceptrice montée en opposition à la deuxième bobine réceptrice, une deuxième bobine émettrice.

Un microdispositif selon l'invention, tel que décrit ci-dessus, permet, lors de la mesure de caractéristiques électromagnétiques d'une formation géologique à travers un sondage, d'atteindre une bonne résolution verticale (de l'ordre du centimètre), un couplage faible avec le fluide du forage et avec des microdispositifs semblables et voisins, et, en général, une meilleure insensibilité par rapport aux irrégularités des parois du sondage.

L'invention concerne également une méthode de mesure des caractéristiques électromagnétiques d'un milieu, en utilisant un microdispositif tel qu'exposé ci-dessus. Un cas particulier est celui où les caractéristiques mesurées sont la conductivité et la susceptibilité d'une formation géologique.

Avec une telle méthode, on peut obtenir des mesures présentant une bonne résolution verticale (de l'ordre du centimètre), peu influencées par les fluides de forage, par d'éventuels dispositifs voisins semblables et par les irrégularités des parois du sondage à travers lequel on atteint la formation géologique.

## Brève description des dessins

D'autres caractéristiques et avantages de l'invention ressortiront mieux de la description qui va suivre, donnée à titre purement illustratif et non limitatif, en référence aux figures annexées dans lesquelles :
- la figure 1 représente le principe de mesure de la conductivité par induction,
- la figure 2 représente un microdispositif selon un premier mode de réalisation de l'invention, en position dans un forage,
- les figures 3a et 3b représentent l'allure des caractéristiques verticale et radiale, pour un microdispositif selon un premier mode de réalisation de l'invention,
- les figures 4a et 4b représentent deux microdispositifs selon un premier mode de réalisation de l'invention, de profil, avec des distances de séparation différentes entre les deux récepteurs,

- les figures 5a et 5b représentent les caractéristiques verticale et radiale des microdispositifs des figures 4a et 4b,
- la figure 6 représente un microdispositif selon l'invention, vu en perspective,
- la figure 7 représente une autre variante de réalisation de l'invention, avec des branches du "E" inégales,
- la figure 8 représente un montage électrique pour la mesure du signal et des caractéristiques du milieu à étudier, dans le cas d'un appareil en forme de "E",
- les figures 9a à 9c représentent un deuxième mode de réalisation de l'invention,
- la figure 10 représente un troisième mode de réalisation de l'invention,
- les figures 11 et 12 représente des moyens pour former écran entre une bobine émettrice et une partie de l'environnement hors zone d'intérêt.

## Exposé détaillé de modes de réalisation

La figure 2 illustre un microdispositif de mesure de conductivité par induction, objet de l'invention, en position de mesure dans un forage. Le forage se présente sous la forme d'un trou cylindrique T qui traverse une formation (F) ; G représente un "mud cake" (gâteau de boue) de faible épaisseur (quelques millimètres), contre la paroi de la formation F traversée par le forage.

L'appareil se présente sous la forme d'un circuit magnétique en forme de "E" avec une partie médiane 6 et trois branches latérales 3, 4, 5 perpendiculaires à la partie médiane et parallèles entre elles.

En outre, dans l'exemple représenté sur la figure 2, les parties latérales 3, 4, 5 sont de longueurs égales et les deux écarts entre deux parties latérales voisines 3-4 et 4-5 sont différents. Sur les branches latérales sont bobinés trois enroulements : un enroulement émetteur 31 et deux enroulements récepteurs 41 et 51, bobinés en opposition sur deux branches latérales voisines. Le circuit magnétique est préférentiellement constitué d'un matériau électriquement isolant et magnétiquement doux. Ce matériau présente une perméabilité magnétique relative élevée, ne variant pas avec la température dans la gamme utile (c'est-à-dire la gamme définie entre la température de la surface du puits et la température en profondeur du puits, au niveau des formations géologiques traversées, par exemple :0°C→200°C), ou sinon de manière connue et prévisible de telle façon qu'une correction en cours de diagraphie ou après celle-ci puisse être envisagée. Sont ainsi concernés des matériaux du type ferrites, fer divisé, fer carbonyle ou encore des matériaux à base de fer se présentant sous la forme de tôles feuilletées.

Le bobinage émetteur 31 est alimenté par un courant alternatif basse fréquence $I_o e^{i\omega t}$ (de quelques dizaines de Hertz à quelques dizaines de kiloHertz).

La tension induite aux bornes de chaque récepteur 41 et 51 est la somme de deux contributions : d'une part la variation du flux magnétique direct produit par l'émetteur, d'autre part la variation du flux magnétique secondaire produit par les courants de Foucault induits dans la formation. Afin de n'être sensible qu'au signal issu de la formation, les récepteurs sont bobinés en opposition et leur nombre de spires respectif correctement ajusté de manière à ce que la contribution du flux direct soit éliminée. Une autre façon d'obtenir un tel résultat est d'ajuster la section des extrémités du circuit magnétique, car la tension induite aux bornes d'une bobine est proportionnelle, non seulement à son nombre de spires, mais aussi à sa section.

Le choix d'un montage "équilibré" présente dans notre cas l'autre avantage de supprimer toute perturbation du signal liée aux variations des caractéristiques magnétiques et électriques du circuit magnétique lors de la diagraphie.

L'utilisation d'un circuit magnétique doux ouvert du côté du milieu à mesurer (en forme de "E" dans l'exemple de la figure 2) permet la canalisation du champ magnétique produit par le circuit émetteur dans la formation du sondage. De ce fait, ce champ magnétique induit des courants de Foucault dans la formation, principalement dans une zone A (voir figure 2) en regard du circuit magnétique et très peu en dehors de cette zone, éliminant par là même tout signal perturbateur issu des régions "périphériques" (zones B, C et D sur la figure 2).

On peut étudier, de façon plus précise et quantitative le couplage du microdispositif avec la formation. Soit $\underline{e}$ le signal mesuré (tension induite aux bornes du récepteur) :

$$e = k\iiint_{\text{volume du terrain}} \sigma(x,y,z)S(x,y,z)dxdydz$$

où :

- k est une constante, $k=N_R\omega^2$, ($N_R$ étant le nombre de spires et $\omega=2\pi f$),
- $\sigma(x,y,z)$ est la conductivité électrique du terrain au point $(x,y,z)$,
- $S(x,y,z)$ est la sensibilité au point $(x,y,z)$. Plus S est grand, plus le signal venant du point $(x,y,z)$ de la formation est grand.

On peut se placer en coordonnées cylindriques $r,\theta,z$, l'axe z étant parallèle à celui du forage, et choisi comme indiqué sur la figure 2. En supposant une répartition des terrains indépendante de l'angle $\theta$, on définit la caractéristique radiale :

$$G_r(r) = \int_{-\infty}^{+\infty} S(r,z)dz$$

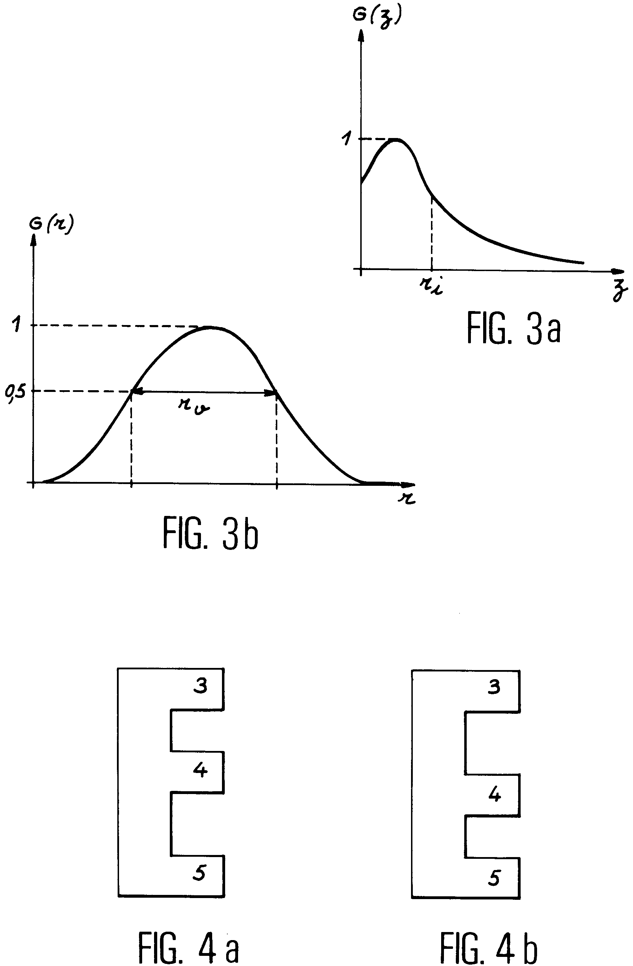

Dans cette caractéristique, on peut déduire la "profondeur d'investigation", qui est la profondeur $r_i$ pour laquelle l'aire sous la courge $G_r(r)$ atteint 50% de la valeur totale de l'aire (voir figure 3a).

On définit ainsi la caractéristique verticale $G_v$ :

$$G_V(z) = \int_0^\infty S(z,r)dr$$

On peut déduire de cette courbe la "résolution verticale" $r_v$, qui est la largeur à mi-hauteur de la courbe (voir figure 3b).

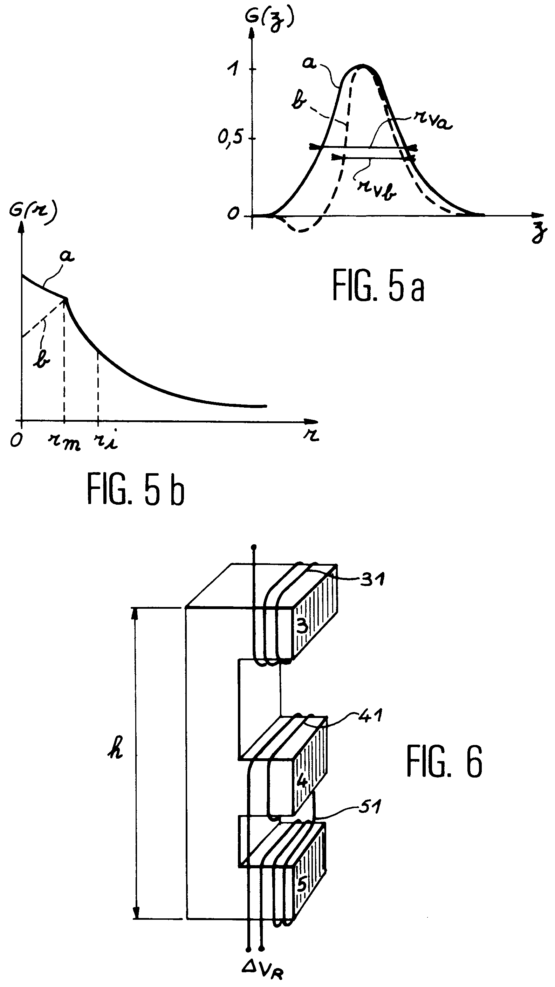

On a représenté sur la figure 4, deux microdispositifs selon l'invention. La différence entre les deux réside dans l'écartement entre les deux parties 4, 5 du circuit sur lesquelles sont enroulés les récepteurs 41 et 51. Cet écartement est plus important dans le microdispositif de la figure 4a que dans celui de la figure 4b. On voit d'après les caractéristiques radiales et verticales correspondantes représentées sur les figures 5a et 5b que, typiquement, on atteint une résolution verticale de 14 à 18 mm (figure 5a) et une profondeur d'investigation (figure 5b) de l'ordre de 13 mm (13,7 mm, la même dans les deux cas). Or, dans le meilleurs des cas, les microdispositifs actuels présentent une profondeur d'investigation d'un centimètre, pour une résolution verticale de 3 à 5 cm, en boues isolantes. On voit donc que grâce à la configuration selon l'invention, on a amélioré la résolution verticale d'environ un facteur 2, la profondeur d'investigation, elle, n'étant pas dégradée.

D'après les figures 5a et 5b, on voit que plus le récepteur 41 est proche du récepteur 51, plus la résolution verticale est fine, la profondeur d'investigation restant, elle, quasiment inchangée : on peut donc "ajuster" la résolution verticale en choisissant une distance plus ou moins grande entre les deux récepteurs.

Enfin, plus les récepteurs sont proches l'un de l'autre, moins le dispositif est sensible aux signaux parasites, qui sont dus, d'une part au signal en provenance du "mud-cake" (gâteau de boue G situé entre l'appareil de mesure et la paroi du forage (voir figure 2)), d'autre part, aux variations de distance capteur/paroi. En effet, dans le cas du dispositif de la figure 4b, la caractéristique radiale présente un maximum à environ $r_m=4$ mm (voir fig. 5b). Ceci signifie que la contribution au signal des parties "proches" (situées entre 0 et 4 mm) du microdispositif est atténuée ; or, c'est précisément de ces parties que proviennent les signaux parasites ci-dessus.

Un autre avantage du microdispositif selon l'invention est le faible couplage entre plusieurs microdispositifs lorsqu'ils sont disposés sur plusieurs patins, pour une mesure de pendagemétrie par exemple. Ceci évite d'avoir recours aux solutions classiques d'excitations multifréquences ou d'excitations commutées qui exigent une électronique associée à chaque microdispositif beaucoup plus complexe. De même, le couplage avec le support central de l'outil, généralement métallique, est grandement réduit.

La figure 6 présente un mode de réalisation de l'invention. Des tôles de Mumétal (Fe-Ni-Mo) de 53 µm d'épaisseur sont agencées pour former un circuit magnétique en "E" dissymétrique. Dans cette réalisation, le circuit émetteur 31 est placé sur une branche latérale 3 et les deux récepteurs 41 et 51 sont montés en opposition sur les deux autres branches 4 et 5, de telle sorte qu'en l'absence de milieu conducteur en regard du capteur, la tension résultante est nulle. Typiquement, un tel dispositif a une hauteur h (voir figure 6) de l'ordre de quelques dizaines de millimètres.

Un montage dans lequel le circuit émetteur est positionné sur la branche centrale tandis que les récepteurs sont montés en opposition sur les branches latérales externes est plus sensible aux irrégularités de paroi que le montage dans lequel deux enroulements récepteurs sont bobinés en opposition sur deux branches latérales voisines.

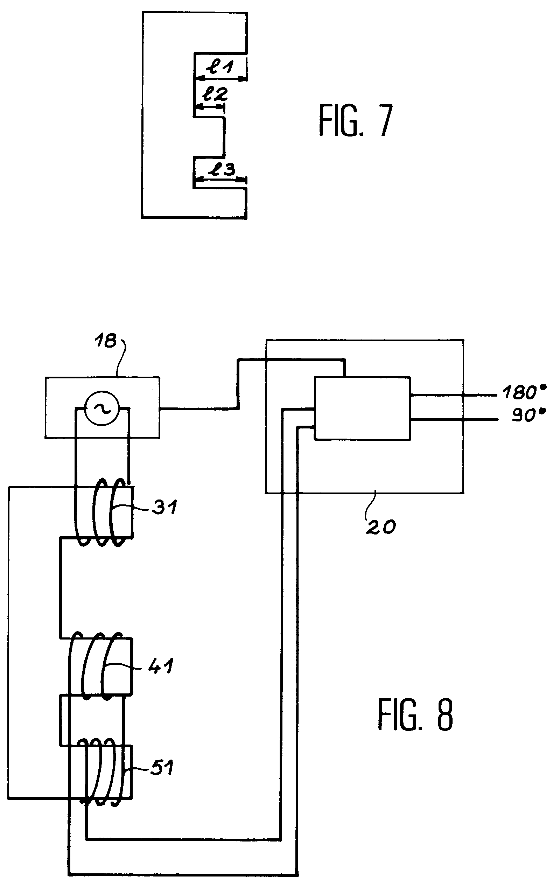

La figure 7 présente un autre mode de réalisation, où les branches du circuit magnétique sont de longueurs inégales (par exemple : $l_1 \approx l_3 \neq l_2$).

Un circuit émetteur est monté sur l'une quelconque des branches latérales extrêmes, les autres branches supportant chacune un circuit récepteur, tous deux montés en opposition.

Sur la figure 8 est illustré un exemple de montage électronique pour un microdispositif selon l'invention, en forme de "E". Ce microdispositif comporte une bobine émettrice 31 et deux bobines réceptrices 41 et 51 montées en opposition.

Le montage comporte des moyens pour engendrer une tension alternative aux bornes de la bobine émettrice et des moyens de mesure d'un signal aux bornes des bobines de réception.

Dans le cas de l'application à la diagraphie par induction dans un sondage, la tension mesurée dans les bobines réceptrices comporte en fait deux composantes = une composante à ±180° par rapport au courant émetteur et permettant de mesurer la conductivité du terrain et une composante à ±90° par rapport au courant émetteur, de laquelle on peut déduire la susceptibilité. Une autre composante à 90° du courant émetteur et correspondant au flux direct induit par ce courant émetteur dans les bobines réceptrices est éliminée par le montage en opposition.

La bobine émettrice 31 est alimentée par un générateur 18 qui envoie un signal de référence de phase à un détecteur de phase 20, à l'entrée duquel sont connectées les bornes des récepteurs (41, 51) montés en opposition.

A la sortie du détecteur de phase, deux signaux, l'un à 180° et l'autre à 90° par rapport au signal de référence permettent de calculer respectivement la conductivité et la susceptibilité du terrain.

Un deuxième mode de réalisation de l'invention est illustré sur les figures 9a à 9c. Sur chacune de ces figures, un circuit en matériau magnétique doux et électriquement isolant comporte une partie médiane 28 et quatre branches latérales parallèles 30, 32, 34, 36 entre elles et perpendiculaires à la partie médiane.

Deux bobines émettrices (non représentées) sont montées sur les branches extérieures 30, 36 ; elles sont de préférence montées en série.

Deux bobines réceptrices (non représentées) sont montées sur les branches intérieures 32, 34 ; elles sont de préférence montées en opposition.

La mesure du signal peut se faire avec un schéma électrique semblable à celui de la figure 8 : les bobines émettrices sont reliées à des moyens pour engendrer une tension alternative à leurs bornes et les bobines réceptrices à des moyens de mesure d'un signal à leurs bornes.

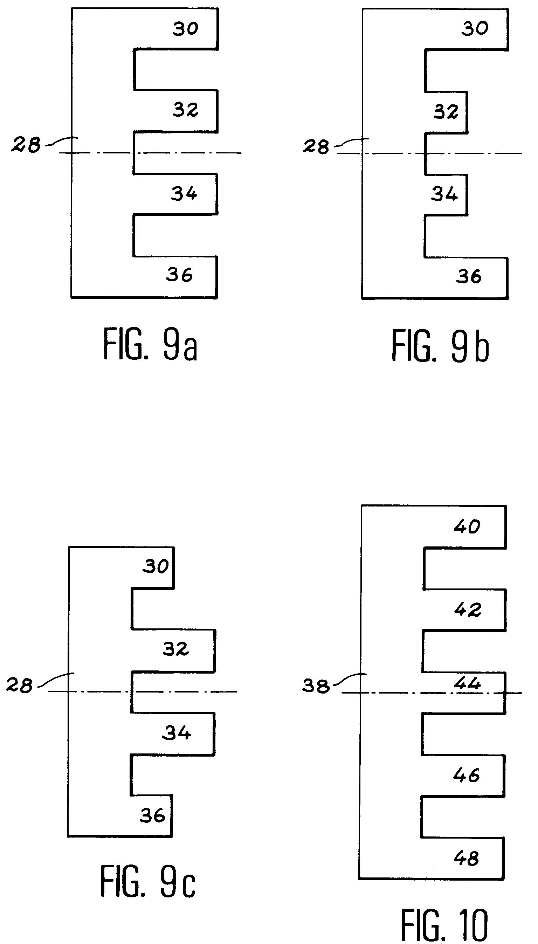

Les deux branches intérieures 32, 34 sont de longueur égale (figure 9a), inférieure (figure 9b) ou supérieure (figure 9c) à la longueur des branches extérieures 30, 36, la compensation du flux directement induit dans les bobines réceptrices par les bobines émettrices apparaissant plus aisée dans le premier cas que dans les deux autres cas.

On peut évidemment inverser la position des deux bobines émettrices avec celles des deux bobines réceptrices.

Un troisième mode de réalisation de l'invention est illustré sur la figure 10. Un circuit en matériau magnétique doux et électriquement isolant comporte une partie médiane 38 et cinq branches latérales parallèles entre elles 40, 42, 44, 46, 48 et perpendiculaires à la partie médiane.

Deux bobines émettrices (non représentées) sont montées en série sur les branches latérales extérieures 40, 48 et trois bobines réceptrices (non représentées) sont montées sur les trois branches intérieures 42, 44, 46 ; la bobine réceptrice centrale (montée en 44) est montée en série-opposition avec les deux autres bobines réceptrices (montées en 42 et 46).

Pour les deux derniers modes de réalisation exposés, on a pu constater une très bonne résolution verticale (de l'ordre du centimètre), un couplage faible avec le fluide du forage ainsi qu'avec les autres capteurs, si d'autres capteurs sont utilisés dans le même forage.

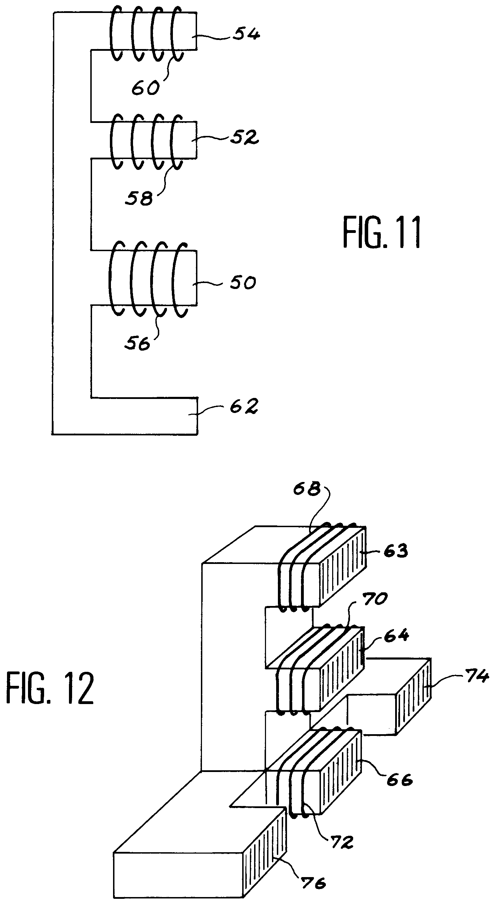

D'autres modes particuliers de réalisation de l'invention sont illustrés sur les figures 11 et 12.

Il s'agit de résoudre le problème des fuites de flux magnétique des émetteurs vers des zones de l'environnement à mesurer qui sont sans intérêt.

Pour cela, on dispose au voisinage direct de la (ou des) branche(s) comportant une bobine émettrice des moyens pour former écran entre ladite bobine et la zone hors d'intérêt;

De tels moyens peuvent avoir la forme illustrée sur la figure 11. Cette figure représente schématiquement un appareil selon l'invention, à 3 branches 50, 52, 54 porteuses d'une bobine émettrice 56 (branche extérieure 50) et de bobines réceptrices 58, 60 (branches 52, 54), montées et alimentées comme il a été expliqué précédemment. L'appareil comporte une branche supplémentaire 62, constituée par exemple du même matériau que le reste de l'appareil, sur laquelle aucune bobine n'est enroulée. Cette branche supplémentaire, parallèle aux autres branches et perpendiculaire à la partie médiane, est située à proximité de la branche 50 sur laquelle est enroulée la bobine émettrice. Ainsi, le flux de cette dernière n'est pas en partie perdu dans des zones du milieu à mesurer qui sont sans intérêt : une meilleure directivité est assurée. En outre, ce mode de réalisation permet d'assurer un meilleur découplage par rapport à d'autres capteurs. Il est possible d'adapter une branche supplémentaire à un appareil à quatre ou cinq bobines (tels que ceux des figures 9a à 10) dès qu'une bobine émettrice est située sur une branche extérieure.

Dans tous les cas, il est également possible d'adapter de part et d'autre d'une branche portant une bobine émettrice, par rapport à un plan passant par la partie médiane de l'appareil et par ses branches latérales porteuses de bobines. Ainsi, sur la figure 12, est représenté un appareil à 3 branches latérales 63, 64, 66 sur lesquelles des bobines réceptrices 68, 70, et une bobine émettrice 72 sont enroulées.

De part et d'autre de la branche 66, porteuse de la bobine émettrice, se trouvent deux branches 74, 76, non porteuses de bobines, constituée par exemple du même matériau que le reste de l'appareil. Ces branches supplémentaires 74, 76 ont elles aussi un effet de canalisation du flux vers les zones d'intérêt. Elles permettent également un meilleur découplage par rapport à d'autres capteurs situés dans le forage.

Les deux solutions exposées ci-dessus pour canaliser le flux d'une bobine émettrice peuvent bien sur être combinées.

L'invention décrite s'applique à la diagraphie de conductivité et de susceptibilité dans des formations géologiques traversées par des forages.

Elle peut s'appliquer, plus généralement, à la mesure de caractéristiques électromagnétiques de matériaux électriquement conducteurs, par exemple par mesure de leur conductivité et/ou de leur susceptibilité.

## Revendications

1. Microdispositif de diagraphie d'un milieu comprenant une bobine émettrice (31, 56, 72) et deux bobines de réception (41, 51, 58, 60, 68, 70), caractérisé en ce qu'il comprend également un circuit en matériau magnétique doux et électriquement isolant, en forme de "E", ouvert sur le milieu à mesurer, avec une partie médiane (6) et trois branches latérales (3, 4, 5, 50, 52, 54, 63, 64, 66) perpendiculaires à la partie médiane et parallèles entre elles, les bobines étant enroulées sur ces branches latérales de telle sorte que les bobines de réception soient situées sur des branches latérales voisines.

2. Microdispositif selon la revendication 1, les deux écarts entre des branches latérales voisines étant égaux l'un à l'autre.

3. Microdispositif selon la revendication 1, les deux écarts entre des branches latérales voisines étant différents l'un de l'autre.

4. Microdispositif selon la revendication 1, les branches latérales étant de longueur inégale.

5. Microdispositif selon la revendication 1, comportant en outre des moyens (62, 74, 76) pour former écran entre la bobine émettrice et une zone sans intérêt du milieu à examiner.

6. Microdispositif selon la revendication 5, comportant une branche supplémentaire (62) sur laquelle aucune bobine n'est enroulée et située au voisinage direct de la branche (50) sur laquelle est enroulée la bobine émettrice (56).

7. Microdispositif selon l'une des revendications 1, 5 ou 6, deux branches supplémentaires (74, 76) étant situées de chaque côté de la branche (66) sur laquelle est enroulée la bobine émettrice (72), par rapport à un plan passant par la partie médiane et les trois branches latérales (63, 64, 66).

8. Microdispositif de diagraphie d'un milieu comprenant une bobine émettrice et deux bobines de réception, caractérisé en ce qu'il comprend également une deuxième bobine émettrice, un circuit en matériau magnétique doux et électriquement isolant qui sert de support à chacune des bobines, qui est ouvert sur le milieu à mesurer et qui comporte une partie médiane (28) et quatre branches (30, 32, 34, 36) latérales parallèles entre elles et perpendiculaires à la partie médiane.

9. Microdispositif selon la revendication 8, les deux bobines de réception étant situées sur les deux branches latérales centrales (32, 34), les deux branches latérales extérieures (30, 36) étant porteuses chacune d'une bobine émettrice.

10. Microdispositif de diagraphie selon la revendication 9, comportant une cinquième branche latérale parallèle aux quatre autres branches latérales, ainsi qu'une troisième bobine réceptrice, les bobines étant montées dans l'ordre suivant, à partir d'une des branches latérales les plus extérieures : une première bobine émettrice, une première bobine réceptrice, une deuxième bobine réceptrice montée en opposition à la première bobine réceptrice, une troisième bobine réceptrice montée en opposition à la deuxième bobine réceptrice, une deuxième bobine émettrice.

11. Microdispositif selon l'une des revendications 8 à 10, comportant en outre des moyens pour former écran entre au moins une bobine émettrice et une zone sans intérêt du milieu à examiner.

12. Microdispositif selon la revendication 11, comportant une première branche supplémentaire, sur laquelle aucune bobine n'est enroulée et située au voisinage direct d'une des branches porteuses d'une bobine émettrice.

13. Microdispositif selon la revendication 12, comportant une deuxième branche supplémentaire, sur laquelle aucune bobine n'est enroulée, et située au voisinage direct de l'autre branche porteuse d'une bobine émettrice.

14. Microdispositif selon la revendication 11, deux branches supplémentaires étant situées de chaque coté d'une des branches porteuses d'une bobine émettrice, par rapport à un plan passant par la partie médiane et les branches latérales porteuses de bobines.

15. Microdispositif selon la revendication 8, les deux bobines émettrices étant situées sur les deux branches latérales centrales (32, 34), les deux branches latérales extérieures (30, 36) étant porteuses chacune d'une bobine de réception.

16. Microdispositif selon la revendication 15, comportant en outre des moyens pour former écran entre au moins une bobine émettrice et une zone sans intérêt du milieu à examiner.

17. Microdispositif selon la revendication 16, deux branches supplémentaires étant situées de chaque coté d'au moins une des branches porteuses d'une bobine émettrice, par rapport à un plan passant par la partie médiane et les branches latérales porteuses de bobines.

18. Microdispositif selon une des revendications précédentes, caractérisé en ce que le matériau magnétique doux est choisi parmi les matériaux suivants :
    - ferrite,
    - fer divisé,
    - fer carbonyle,
    - matériau à base de fer se présentant sous forme de tôle feuilletée.

19. Méthode de mesure des caractéristiques électromagnétiques d'un milieu en utilisant un microdispositif selon une des revendications 1 à 18.

20. Méthode selon la revendication 19, où les caractéristiques mesurées sont la conductivité et la susceptibilité d'une formation géologique.

FIG. 1

FIG. 2

$G(z)$

$1$

$r_i$

$z$

FIG. 3a

$G(r)$

$1$

$0,5$

$r_v$

$r$

FIG. 3b

3

4

5

FIG. 4 a

3

4

5

FIG. 4 b

FIG. 5 a

FIG. 5 b

FIG. 6

$\Delta V_R$

FIG. 7

FIG. 8

FIG. 9a

FIG. 9b

FIG. 9c

FIG. 10

FIG. 11

54

60

52

58

50

56

62

FIG. 12

68

63

70

64

74

66

72

76

**Office européen des brevets**

# RAPPORT DE RECHERCHE EUROPEENNE

Numero de la demande

**EP 94 40 2828**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | EP-A-0 177 626 (KAWASAKI STEEL CORPORATION) <br> * abrégé * <br> * page 15, ligne 33 - ligne 35; figure 8 * <br> --- | 1,2, 18-20 | G01N27/72 |
| Y | JOURNAL OF PHYSICS E: SCIENTIFIC INSTRUMENTS, <br> vol.9, no.4, Avril 1976 <br> pages 257 - 258 <br> D W HOWARD AND G.WALLACE 'ROCK SUSCEPTIBILITY METER' <br> * abrégé * <br> * page 258, colonne de gauche, alinéa 2; figure 1 * <br> --- | 1,2, 18-20 | |
| A | DE-A-24 31 397 (FÖRSTER,FRIEDRICH) <br> * page 5, alinéa 1; figures 1-3 * <br> * page 1, alinéa 2 - page 2, alinéa 1 * <br> --- | 1,18 | |
| A | FR-A-2 288 972 (ALLMANNA SVENSKA ELEKTRISKA AKTIEBOLAGET) <br> * page 1, ligne 1 - ligne 31; figure 1A * <br> --- | 1 | **DOMAINES TECHNIQUES RECHERCHES (Int.Cl.6)** |
| A | DE-C-471 614 (AMERICAN CHAIN COMPANY INC.) <br> * page 1, colonne de gauche, ligne 1 - ligne 14 * <br> * page 7, colonne de gauche, ligne 49 - page 7, colonne de droite, ligne 77; figure 9 * <br> --- | 1 | G01N |
| A | DE-A-40 13 429 (MITSUBISHI) <br><br> * abrégé; figure 1 * <br> ----- | 1,5,11, 16 | |

Le présent rapport a été établi pour toutes les revendications

| Lieu de la recherche | Date d'achèvement de la recherche | Examinateur |
|---|---|---|
| LA HAYE | 17 Février 1995 | Kempf, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)